# EUROPÄISCHE PATENTANMELDUNG

(11) **EP 0 922 569 A2**
(43) Veröffentlichungstag der Anmeldung: **16.06.1999**
(21) Anmeldenummer: 98122754.9
(22) Anmeldetag: 01.12.1998
(51) Int. Cl.: B32B 29/02, E04B 1/74, E04F 15/18, D06N 7/00

(54) **Dämmaterial mit Schichtstruktur und Verfahren zu seiner Herstellung**

(30) Priorität: 11.12.1997 DE 19755070
(71) Anmelder: Weber-Heck, Peter, 51645 Gummersbach (DE)
(72) Erfinder: Weber-Heck, Peter, 51645 Gummersbach (DE)
(74) Vertreter: Patentanwälte Lippert, Stachow, Schmidt & Partner

(57) **Zusammenfassung**

Die Erfindung betrifft ein Dämmaterial für den Innenausbau, insbesondere als Parkett- oder Estrichuntergrund und als Isoliertapete für Wände und Decken.
Die Verwendung von Hanf- und/oder Flachsfasern in solchen Materialien wird dadurch erschwert, daß die daraus hergestellten lockeren Schichten nicht hinreichend stabil sind. Eine Schichtstruktur, die außer einer solchen Faserschicht noch eine Papierschicht, eine Kleberschicht und gegebenenfalls eine Aluminiumschicht umfaßt, ist stabil, hat gute Dämmeigenschaften und ist frei von gesundheitsgefährdenden Stoffen.

## Beschreibung

Die Erfindung betrifft ein Dämmaterial, insbesondere für die Verwendung als Parkettuntergrund und als Isoliertapete beim Innenausbau.

Beim Innenausbau stellt sich häufig die Aufgabe, den Übergang von Wärme und von Schallschwingungen durch Wände, Boden und Decken nach außen oder in angrenzende Räume soweit wie möglich zu verhindern. Zur Trittschalldämmung bei harten Bodenbelägen, wie Parkett, werden beispielsweise Dämmaterialien unter dem Bodenbelag eingebaut. Um Wärmeverluste durch Wände und Decken zu vermindern werden diese mit wärmedämmenden Isoliertapeten versehen, auf die gegebenenfalls noch eine Dekorationstapete aufgebracht werden kann.

Weit verbreitete Anwendung als Dämmaterialien haben geschäumte Kunststoffe wie EPS (expandiertes Polystyrol) gefunden. Diese Materialien können in Form von Platten oder Bahnen auch als Parkettuntergrund oder Isoliertapete verwendet werden. Solche Kunststoffschäume sind jedoch relativ teuer. Ihre Herstellung ist meist mit der Freisetzung umweltschädlicher Treibgase verbunden. Außerdem können einige bei ihrer Entsorgung oder im Brandfall schädliche Stoffe freisetzen. Daher werden neuerdings auch Dämmaterialien aus natürlichen Rohstoffen wie Baumwolle oder Wolle verwendet. Soweit es sich dabei um Faserstoffe handelt, werden diese in Form von Vliesen (non-wovens), Geweben oder Gewirken eingesetzt.

In jüngster Zeit sind die bislang im wesentlichen für Seilerwaren oder Säcke verwendeten Hanffasern auch für verschiedene textile Anwendungen herangezogen worden. Aufgrund ihrer Widerstandsfähigkeit gegen Wasser und Verrottung kommen sie, wie auch Flachsfasern, für die Herstellung von Dämmaterialien in Frage. Wegen der geringen Kräuselung der Hanffasern sind jedoch die für die Dämmung benötigten lockeren Schichten nicht hinreichend stabil. So kann es bereits während der Herstellung und bei der Verwendung solcher Schichten zu unerwünschten örtlichen Schwankungen in der Stärke der Schicht kommen. Übliche synthetische Bindemittel können aus wirtschaftlichen und ökologischen Gründen, z.B. wegen Freisetzung von Formaldehyd, nicht im erforderlichen Maße zur Stabilisierung der Schichten eingesetzt werden.

Die Erfindung stellt sich die Aufgabe, Dämmaterialien auf der Basis von Hanf- und/oder Flachsfasern zu schaffen, die hinreichend stabil und frei von schädlichen Bestandteilen sind, sowie ein Verfahren zur Herstellung solcher Dämmaterialien vorzuschlagen.

Diese Aufgabe wird durch ein Dämmaterial nach Anspruch 1 sowie durch Verfahren nach den Ansprüchen 11 und 14 gelöst.

Die Schicht aus Hanf- und/oder Flachsfasern besteht bevorzugt ausschließlich oder zum überwiegenden Teil aus Hanffasern.

Die Schicht aus Hanf- und/oder Flachsfasern kann sowohl aus Garnen, beispielsweise durch Weben oder Wirken, hergestellt sein oder auch ein Vlies (non-woven) darstellen. Bevorzugt werden Vliese, und zwar sowohl Trocken- als auch Naßvliese.

Besonders bevorzugt werden Naßvliese und vernadelte Wirrfaservliese, die nach bekannten Verfahren hergestellt werden können. Die dafür verwendeten Fasern sind etwa 30 mm lang; sie können gegebenenfalls aus natürlicher Faser durch Häckseln hergestellt werden. Es lassen sich auch solche Fasern verwenden, die bei der Herstellung von Seilerwaren oder Textilien ausgeschieden werden, weil sie zu kurz sind.

Die Schicht aus Hanf- und/oder Flachsfasern ist mindestens 2 mm und vorzugsweise 3 bis 100 mm dick.

Soweit erforderlich, können die Faserschichten durch Flammschutzmittel brandgeschützt ausgerüstet werden.

Die Papierschicht kann durch Kraftpapiere, Schrenzpapiere (Recyclingpapiere), sonstige Papiere sowie Pappen und Wellenstoff realisiert sein. Bevorzugt hat sie ein Flächengewicht von mindestens 100 g/qm. Besonders bevorzugt ist Schrenzpapier und Kraftpapier.

Die gegebenenfalls vorhandene Aluminiumschicht besteht bevorzugt aus reinem (>99 %) Aluminium, ist bevorzugt 10 bis 45 Mikrometer dick und befindet sich bevorzugt auf der der Kleberschicht gegenüberliegenden Seite der Papierschicht. Sie ist mit üblichen Klebstoffen mit der Papierschicht verbunden.

Die Klebstoffschicht ist bevorzugt ein Heißkleber oder ein Kaltkleber. Ihr Flachengewicht liegt im Fall des Heißklebers bevorzugt zwischen 10 und 150 g/qm, besonders bevorzugt zwischen 30 und 130 g/qm, je nach der Dicke der Faserschicht. Bei Kaltklebern beträgt das Flächengewicht der getrockneten Kleberschicht bevorzugt 5 bis 10 g/qm. Aus Gründen des Gesundheits- und Umweltschutzes, insbesondere auch bei der Entsorgung, werden halogenfreie Klebstoffe bevorzugt.

Geeignete Heißkleber sind solche auf der Basis von Copolymeren aus Ethylen und Ethylacrylat oder Vinylacetat, von Polyamiden, Polyestern, Polyisobutylenen und Polyvinylbutyralen. Bevorzugt wird der Heißkleber durch ein Bitumen dargestellt. Besonders bevorzugt sind Bitumen mit einem Schmelzpunkt zwischen 100 und 190 °C. Diese Bitumenprodukte sollten frei von schädlichen Bestandteilen wie Teere, andere Hohlenprodukte, Altöl, Fluxöl sein.

Als Kaltkleber eignen sich bevorzugt wäßrige Dispersionen von Polyacrylaten, Polyvinylacetaten, Naturkautschuk und Ethylen-Vinylacetat-Copolymeren sowie wäßrige Leime auf der Basis von Celluloseethern, Dextrin, Casein oder Stärke.

Die Herstellung des erfindungsgemaßen Dämmaterials erfolgt nach unterschiedlichen Verfahren, je nachdem ob ein Heiß- oder ein Kaltkleber verwendet wird. Sie erfolgt aus wirtschaftlichen Gründen bevorzugt in einem kontinuierlichen Prozeß.

Auf eine laufende Papierbahn wird mittels einer üblichen Vorrichtung ein geschmolzener Heißkleber mit dem gewünschten Flächengewicht aufgetragen. Die beschichtete Seite der Papierbahn wird durch geeignete Führungsmittel mit einer laufenden Bahn eines Vlieses aus Hanf- und/oder Flachsfasern zusammengeführt. Danach wird der Schichtverbund gekühlt.

Die Papier- und die Vliesbahn können über Walzen geführt werden. Diese können eine Spalt bilden, in den der Schichtverbund eintritt und in dem er einem gewissen Druck ausgesetzt wird. Der Auftrag des Heißklebers kann möglichst dicht vor disem Spalt erfolgen. Zur Kühlung kann der Schichtverbund über eine oder mehrere gekühlte Walzen geführt werden.

Wenn der Heißkleber beim Auftragen eine Temperatur hat, bei der Papier und Hanf nicht dauerhaft thermisch stabil sind, muß die Kühlung möglichst schnell nach dem Auftragen des Klebers erfolgen. Dies kann durch geeignete Anordnung der kühlenden Mittel sowie ausreichende Geschwindigkeit der Bahnen erreicht werden.

Bevorzugt hat der Heißkleber eine Temperatur von mindestens 180 °C. Der Kühlvorgang wird bevorzugt innerhalb von 20 s nach Auftragen des Heißklebers auf die Papierbahn eingeleitet.

Bei der Verwendung von Kaltklebern wird dieser in ähnlicher Weise auf eine laufende Papierbahn aufgetragen. Die beschichtete Papierbahn wird dann mit einer Bahn aus einem Vlies aus Hanf- und/oder Flachsfasern zusammengeführt. Danach wird der Schichtenverbund einer Trocknungsvorrichtung zugeführt, die beispielsweise durch eine oder mehrere beheizte Walzen realisiert werden kann. Um Dimensionsänderungen der Bahnmaterialien durch das Lösungs- bzw. Dispersionsmittel des Kaltklebers und damit die Bildung von Falten zu vermeiden, ist es vorteilhaft, die Trocknung möglichst bald nach dem Auftragen des Klebers und möglichst schnell vorzunehmen. Bevorzugt wird bei Temperaturen von mindestens 120 °C getrocknet.

Die erfindungsgemäßen Dämmaterialien haben eine gute Dämmwirkung gegenüber Wärme und Schall. Sie können unter anderem als Untergrund für Parkett, Estrich und andere Bodenbeläge sowie für den Belag von Wänden und Decken entweder als Untergrund-Isoliertapete oder - wenn die Papierschicht auf der klebstofffreien Seite entsprechend dekoriert ist - auch als dekorative Isoliertapete verwendet werden. Gegenüber bekannten Materialien auf der Basis natürlicher Faserstoffe zeichnen sie sich durch hohe Beständigkeit gegen Feuchtigkeit und Verrottung aus. Sie sind weitgehend geruchlos, frei von gesundheitsgefährdenden Stoffen und setzen auch im Brandfalle und bei der Verarbeitung keine solchen frei. Sie sind weder wasser- noch bodengefährdend und können daher gegebenfalls als Hausmüll entsorgt, wenn sie kein Aluminium enthalten auch kompostiert werden. Da sie von Hausstaubmilben gemieden werden, sind sie auch hervorragend für den Ausbau von Räumen für Allergiker geeignet.

Die Erfindung wird anhand der folgenden Ausführungsbeispiele näher erläutert.

### Beispiel 1

In eine Kaschieranlage wurde eine Wickelrolle, mit einem vernadelten Hanfvlies von 3 bis 3,5 mm Dicke, 500 g/m² Flächengewicht und 100 cm Breite, sowie eine Rotationsrolle mit einer Bahn aus Schrenzpapier von 100 g/m² Flächengewicht und 100 cm Breite eingebaut. Die Papierbahn wurde mit einer Geschwindigkeit von 40 m/min mittels Auftragswalzen und gegenläufigen Rollrakeln mit 130 g/m² Bitumen 85/40 beschichtet, das eine Temperatur von 200 °C aufwies. Danach wurde die beschichtete Seite mit dem mit gleicher Geschwindigkeit abgewickelten Hanfvlies zusammengeführt, durch eine Presspartie gefahren und über wassergekühlte Kühlwalzen von etwa 8 °C zur Aufwicklung geführt.

Das so hergestellte Dämmaterial wies einen Berstdruck von 1200 N nach DIN 53112-90, eine Dehnung bei Bruch von im Mittel > 6 mm nach DIN 53112, eine Luftschichtdicke von 0,42 m nach DIN 52615-87 auf und entsprach den Anforderungen für die Baustoffklasse B2 nach DIN 4102. Dieses Material eignet sich insbesondere zur Dämmung von Wänden und Decken.

### Beispiel 2

Auf das in Beispiel 1 verwendete Schrenzpapier wurde zunächst einseitig eine Schicht aus Bitumen B200 mit einem Flächengewicht von 20 g/m² aufgetragen. In der oben erwähnten Kaschieranlage wurde auf die andere Seite der Schrenzpapierbahn Bitumen 85/40 mit einem Flächengewicht von 80 g/m² wie in Beispiel 1 beschrieben aufgetragen und die beschichtete Bahn mit einer Bahn aus vernadeltem Hanfvlies von 5 mm Stärke und einem Flächengewicht von 790 g/m² zusammengeführt, gekühlt und aufgewickelt. Die Durchlaufgeschwindigkeit betrug 40 m/min. Das so erhaltene Dämmaterial eignet sich insbesondere zum Abdecken des Randes von Estrichen.

### Beispiel 3

Es wurde verfahren wie im Beispiel 2, jedoch wurde ein 110 cm breites Schrenzpapier und ein 23 mm starkes Hanfvlies mit einem Flächengewicht von 1500 g/m² und einer Breite von 100 cm verwendet. Das so erhaltene Material eignet sich insbesondere als Dämmschicht unter Estrichen.

## Patentansprüche

1. Dämmaterial mit Schichtstruktur für den Innenausbau, insbesondere zur Verwendung als Parkett- und Estrichuntergrund sowie als Isoliertapete, umfassend eine Papierschicht, eine Klebstoffschicht, eine Schicht aus Hanf- und/oder Flachsfasern sowie gegebenenfalls eine Aluminiumschicht.

2. Dämmaterial nach Anspruch 1, **dadurch gekennzeichnet,** daß die Schicht aus Hanf- und/oder Flachsfasern eine Vliesschicht ist.

3. Dämmaterial nach Anspruch 2, **dadurch gekennzeichnet,** daß die Vliesschicht ein Naßvlies oder ein vernadeltes Wirrfaservlies ist.

4. Dämmaterial nach einem der vorhergehenden Ansprüche, **dadurch gekennzeichnet,** daß die Schicht aus Hanf- und/oder Flachsfasern vorwiegend oder ausschließlich aus Hanffasern besteht.

5. Dämmaterial nach einem der vorhergehenden Ansprüche, **dadurch gekennzeichnet,** daß die Papierschicht eine Stärke von mindestens 100 g/qm aufweist.

6. Dämmaterial nach einem der vorhergehenden Ansprüche, **dadurch gekennzeichnet,** daß die Papierschicht aus Kraftpapier oder aus Schrenzpapier besteht.

7. Dämmaterial nach einem der vorhergehenden Ansprüche, **dadurch gekennzeichnet,** daß die Schicht aus Hanffasern eine Dicke von mindestens 2 mm aufweist.

8. Dämmaterial nach einem der vorhergehenden Ansprüche, **dadurch gekennzeichnet,** daß die Klebstoffschicht aus einem Heißkleber besteht.

9. Dämmaterial nach Anspruch 8, **dadurch gekennzeichnet,** daß der Heißkleber ein Bitumenkleber ist.

10. Dämmaterial nach einem der vorhergehenden Ansprüche, **dadurch gekennzeichnet,** daß die Klebstoffschicht aus einem Kaltkleber besteht.

11. Verfahren zur Herstellung eines Dämmaterials, umfassend die Schritte
- Beschichten einer Papierbahn mit einem Heißkleber,
- Zusammenführen der beschichteten Seite der Papierbahn mit einer Bahn aus einem Vlies aus Hanf- und/oder Flachsfasern,
- Kühlen des Schichtverbundes.

12. Verfahren nach Anspruch 11, **dadurch gekennzeichnet,** daß der Heißkleber eine Temperatur von mindestens 180 °c hat.

13. Verfahren nach Anspruch 11, **dadurch gekennzeichnet,** daß die Zeitdauer zwischen Beschichten und Kühlen nicht mehr als 20 s beträgt.

14. Verfahren zur Herstellung eines Dämmaterials, umfassend die Schritte
- Beschichten einer Papierbahn mit einem Kaltkleber,
- Zusammenführen der beschichteten Seite der Papierbahn mit einer Bahn aus einem Vlies aus Hanf- und/oder Flachsfasern,
- Trocknen des Schichtverbundes.

15. Verfahren nach Anspruch 14, **dadurch gekennzeichnet,** daß der Kaltkleber eine wäßrige Dispersion oder Lösung ist.

16. Verfahren nach Anspruch 14, **dadurch gekennzeichnet,** daß die Trocknung bei einer Temperatur von mindestens 120 °C erfolgt.
